# FASCICULE DE BREVET EUROPEEN

(11) **EP 1 954 705 B1**
(45) Date de publication et mention de la délivrance du brevet: **07.03.2012**
(21) Numéro de dépôt: 06818328.4
(22) Date de dépôt: 31.10.2006
(51) Int. Cl.: C07F 17/00, C08F 4/52, C08F 210/12

(54) **COMPLEXE METALLOCENE BOROHYDRURE D UN LANTHANIDE, SYSTEME CATALYTIQUE L INCORPORANT, PROCEDE DE POLYMERISATION L UTILISANT ET COPOLYMERE ETHYLENE/BUTADIENE OBTENU PAR CE PROCEDE**
BORHYDRID-METALLOCEN-KOMPLEX EINES LANTHANIDEN, KATALYTISCHES SYSTEM, DAS DIESEN KOMPLEX UMFASST, POLYMERISATIONSVERFAHREN, BEI DEM DIESER EINGESETZT WIRD, UND UNTER ANWENDUNG DIESES VERFAHRENS ERHALTENES ETHYLEN-BUTADIEN-COPOLYMER
BOROHYDRIDE METALLOCENE COMPLEX OF A LANTHANIDE, CATALYTIC SYSTEM INCLUDING SAID COMPLEX, POLYMERISATION METHOD USING SAME AND ETHYLENE/BUTADIENE COPOLYMER OBTAINED USING SAID METHOD

(30) Priorité: 09.11.2005 FR 0511393
(43) Date de publication de la demande: 13.08.2008
(73) Titulaire: Société de Technologie Michelin, 63000 Clermont-Ferrand (FR); Michelin Recherche et Technique S.A., 1763 Granges-Paccot (CH); Total Petrochemicals France, 92800 Puteaux (FR); Centre National de la Recherche Scientifique, 75794 Paris Cedex 16 (FR); Ecole Superieure de Chimie Physique Electronique de Lyon, 69616 Villeurbanne, Cedex (FR)
(72) Inventeur: THUILLIEZ, Julien, F-63100 Clermont-Ferrand (FR); BOISSON, Christophe, F-01390 Tramoyes (FR); SPITZ, Roger, F-69006 Lyon (FR)
(74) Mandataire: Le Cam, Véronique Marie Christine
(86) Numéro de dépôt international: PCT/EP2006/010453
(87) Numéro de publication internationale: WO 2007/054224

(56) Documents cités:
- EP-A- 1 092 731
- WO-A-2004/035639
- US-A1- 2003 004 287
- QIAN C., NIE W., SUN J.: "Synthesis of diphenylmethylene bridged fluorenyl cyclopentadienyl lanthanocene complexes with Cs symmetry and crystal structures of the ate complexes [Li(thf)4][LnCl2{(C13H8)CPh2(C5H4)}] and [Li(thf)4][Ln(BH4)2{(C13H8)CPh2(C5H4)}] (Ln = Nd or La)" JOURNAL OF CHEMICAL SOCIETY, DALTON TRANSACTIONS, 1999, pages 3283-3287, XP002393169

## Description

La présente invention concerne un complexe métallocène borohydrure d'un lanthanide, son procédé de préparation, un système catalytique incorporant ce complexe, un procédé de copolymérisation d'au moins deux monomères oléfiniques au moyen de ce système catalytique et un copolymère d'éthylène et de butadiène obtenu par ce procédé, dont les unités issues du butadiène comprennent des enchaînements 1,4-cyclohexane ou 1,2-cyclohexane.

Pour la copolymérisation de l'éthylène et d'un diène conjugué, il est connu d'utiliser des systèmes catalytiques à base de complexes métallocènes halogénés de lanthanides.

Le document de brevet EP-A-1 092 731 enseigne d'utiliser, pour l'obtention de copolymères d'éthylène et d'un diène conjugué, un système catalytique comprenant :
- d'une part, un complexe organométallique représenté par l'une des formules génériques suivantes A ou B : 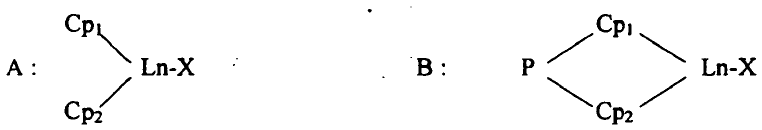
   où Ln représente un métal d'un lanthanide dont le numéro atomique peut aller de 57 à 71,
   où X représente un halogène pouvant être le chlore, le fluor, le brome ou l'iode,
   où Cp₁ et Cp₂ comprennent chacun un, groupe cyclopentadiényle ou fluorényle qui est substitué ou non et où P est un pont répondant à la formule MR₁R₂, où M est un élément de la colonne IVA de la classification périodique de Mendeleev, et où R₁ et R₂ représentent un groupe alkyle comprenant de 1 à 20 atomes de carbone, et
- d'autre part, un co-catalyseur qui est choisi parmi un groupe comprenant un alkyl magnésium, un alkyl lithium, un alkyl aluminium, ou un réactif de Grignard, ou qui est constitué d'un mélange de ces constituants.

Le document de brevet WO-A-2004/035639 au nom des Demanderesses enseigne d'utiliser, pour l'obtention de copolymères d'éthylène et de butadiène, un système catalytique comprenant :
(i) un complexe métallocène de lanthanide représenté par l'une ou l'autre des formules suivantes : 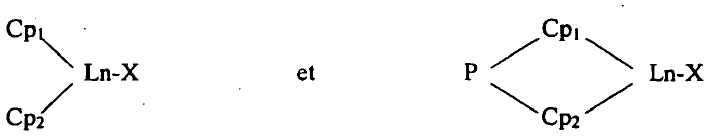
   où Ln représente un métal d'un lanthanide dont le numéro atomique peut aller de 57à71,
   où X représente un halogène pouvant être le chlore, le fluor, le brome ou l'iode, où, dans la première formule, sont reliées audit métal Ln deux molécules de ligands Cp₁ et Cp₂ identiques ou différentes, constituées chacune d'un groupe fluorényle qui est substitué ou non, et
   où, dans la seconde formule, est reliée audit métal Ln, une molécule de ligand constituée de deux groupes fluorényle Cp₁ et Cp₂ identiques ou différents qui sont substitués ou non et qui sont reliés entre eux par un pont P répondant à la formule MR₁R₂, où M est un élément de la colonne IVA de la classification périodique de Mendeleev, et où R₁ et R₂ représentent un groupe alkyle comprenant de 1 à 20 atomes de carbone, et
(ii) un co-catalyseur appartenant au groupe constitué par un alkyl magnésium, un alkyl lithium, un alkyl aluminium, un réactif de Grignard, ou qui est constitué d'un mélange de ces constituants.

D'autres systèmes catalytiques à base de complexes mono-cyclopentadiényle de type borohydrure de lanthanide sont notamment connus dans la littérature pour l'homopolymérisation de dioléfines.

On peut par exemple citer l'article de D. Barbier-Baudry, O. Blacque, A. Hafid, A. Nyassi, H. Sitzmann, M. Visseaux, European Journal of Inorganic Chemistry 2000, 2333-2336, qui mentionne un complexe de formule (C₅H(*i*Pr)₄)Ln(BH₄)₂(THF) incluant un ligand mono-cyclopentadiényle substitué par un groupe iso-propyle (*i*Pr), où THF est le tétrahydrofuranne, pour l'homopolymérisation de l'isoprène ou du styrène après alkylation par un co-catalyseur de type organolithien.

Plus décemment, l'article de F. Bonnet, M. Visseaux, A. Pereira, D. Barbier-Baudry, Macromolecules 2005, 38, 3162-3169 a divulgué l'utilisation d'un complexe similaire de formule (C₅Me₄(*n*Pr))Nd(BH₄)₂(THF)₂ incluant un ligand mono-cyclopentadiényle penta-substitué, où *n*Pr est un groupe n-propyle, pour la polymérisation stéréospécifique 1,4-trans de l'isoprène après alkylation par un co-catalyseur de type dialkylmagnésien.

On notera que ces complexes mono-cyclopentadiényle borohydrure de lanthanide n'ont pas été utilisés à ce jour pour la copolymérisation de mono-oléfines et de diènes conjugués.

Le document de brevet chinois 1 286 256 divulgue, à titre de catalyseur de polymérisation pour la synthèse de polyméthacrylates, un complexe métallocène borohydrure d'un lanthanide comportant une molécule de ligand constituée d'un groupe fluorényle répondant à la formule suivante :

{[(X₁)₂(R₇)(C₅R₁R₂R₃R₄)(C₁₃H₆R₅R₆)]MX₂(L)ₙ}ₘ,

où :
X₁ représente un groupe alkyle possédant de 1 à 4 C ou un groupe phényle,
X₂ = représente Cl, BH₄, H, un groupe alkyle possédant de 1 à 4 atome de carbone N[Si(CH₃)₃]₂, CH₂[Si(CH₃)₃] ou du tetrahydrofuranne,
R₁, R₃, R₄ représente H ou le radical CH₃,
R₂ représente H,
R₅, R₆ représentent H, un groupe alkyle possédant de 1 à 4 atomes de carbone ou Si(CH₃)₃,
R₇ représente Si, C, Ge ou Sn,
M représente un lanthanide, le yttrium ou le scandium,
L représente Si(CH₃)₃, Li(THF)₄, [éther couronne Y] ou [éther couronne Y]-2,4-époxy hexacycle,
n représente 0 ou 1 et m = 1 ou 2 (si m = 2, n = 0),
Y est un métal monovalent.

Une autre voie de recherche récente a concerné des complexes métallocènes borohydrures de lanthanides incluant un ligand à base de deux groupes cyclopentadiényle. On peut par exemple citer les travaux de S. M. Cendrowski-Guillaume et al., Organometallics 2000, 19,5654-5660 et Macromolecules 2003, 36, 54-60, qui ont divulgué l'utilisation d'un tel complexe métallocène, de formule (C₅Me₅)₂Sm(BH₄)(THF), où Me est un groupe méthyle et ou Sm est le samarium, pour catalyser spécifiquement la polymérisation de l'ε-caprolactone par ouverture de cycles.

On peut également citer les travaux de M. Visseaux et al., Journal of Organometallic Chemistry, 691, (2006), pages 86-92, qui ont divulgué que le métallocène Cp*₂Nd(BH₄)(THF), lorsqu'il est utilisé en association avec du butyléthylmagnésium, même en présence d'un important excès de THF, constitue un catalyseur très actif de l'éthylène et en présence d'une quantité stoechiométrique de butyléthylmagnésium permettant la polymérisation stéréospécifique 1,4-trans de l'isoprène.

A ce jour, la copolymérisation d'oléfines et de diènes conjugués à l'aide de complexes métallocènes borohydrures de lanthanides n'a pas été décrite et reste un objectif à atteindre.

Un but de la présente invention est de remédier à cet inconvénient, et ce but est atteint en ce que les Demanderesses viennent de découvrir d'une manière inattendue qu'un nouveau complexe métallocène borohydrure d'un lanthanide répondant à la formule suivante B : 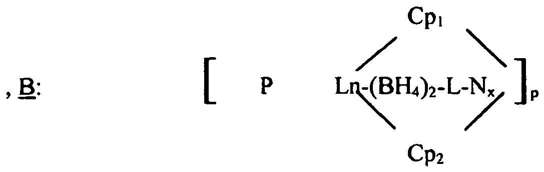
où Ln est un lanthanide dont le numéro atomique est compris entre 57 et 71, inclusivement,
où, dans la formule B, est reliée à Ln une molécule de ligand, constituée de deux groupes fluorényle Cp₁ et Cp₂ identiques ou différents qui sont substitués ou non et qui sont reliés entre eux par un pont P répondant à la formule MR₁R₂, où M est un élément de la colonne IVA de la classification de Mendeleev, et où R₁ et R₂, identiques ou différents, représentent un groupe alkyle comprenant de 1 à 20 atomes de carbone,
où L représente un métal alcalin choisi dans le groupe constitué par le lithium, le sodium et le potassium, où N représente une molécule d'un solvant complexant, tel qu'un éther, où x est un nombre entier ou non qui est supérieur à 0 et où p est un nombre entier qui est égal à 1 ou 2, est utilisable pour la copolymérisation d'oléfines et, en particulier, pour la copolymérisation de mono-oléfines et de diènes conjugués et encore plus spécifiquement pour l'obtention, avec une activité catalytique élevée, de copolymères d'éthylène et de butadiène dont les unités issues du butadiène comprennent des enchaînements 1,2-cyclohexane.

A la connaissance des Demanderesses, on notera que ce complexe métallocène borohydrure d'un lanthanide selon l'invention est le tout premier à ce jour permettant la synthèse d'un copolymère d'au moins une oléfine et d'au moins un diène conjugué comportant des enchaînements 1,2-cyclohexane, lorsqu'il est utilisé en association avec un co-catalyseur d'alkylation choisi dans le groupe constitué par un alkyl magnésium, un alkyl lithium, un réactif de Grignard et un mélange d'un alkyl lithium et d'un alkyl aluminium.

Comme cela ressort de la formule B ci-dessus, on notera que ce complexe métallocène de lanthanide selon l'invention (également appelé « lanthanidocène » par l'homme du métier) inclut spécifiquement, d'une part, deux groupes fluorényle et borohydrure reliés au lanthanide et, d'autre part, le métal alcalin L, de préférence le lithium, associé à la molécule de solvant complexant N qui est de préférence constituée de tétrahydrofuranne (THF).

De préférence, Cp₁ et Cp₂ sont chacun constitués d'un même groupe fluorényle non substitué qui répond à la formule C₁₃H₉ ou C₁₃H₈.

Egalement à titre préférentiel, la formule B est telle que x est égal à 1 et p est égal à 2, le complexe selon l'invention étant alors un dimère dans les deux cas.

Selon un mode de réalisation particulièrement avantageux de l'invention, ledit complexe est de type ponté via le pont de formule MR₁R₂, dans lequel l'élément M est de préférence le silicium et R₁ et R₂ est avantageusement un groupe méthyle.

Encore plus avantageusement, ledit complexe selon l'invention répond à l'une des formules : 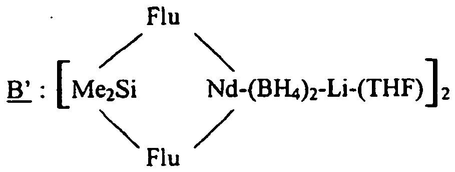 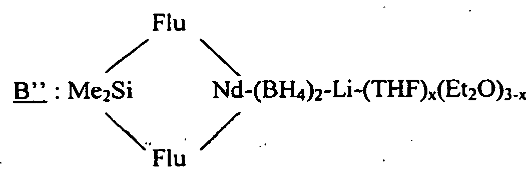 où Flu représente un groupe fluorényle non substitué de formule C₁₃H₈ dans le complexe B', ou substitué par un groupe alkyle comprenant de 1 à 20 atomes de carbone dans le groupe B", où Me représente un groupe méthyle, où Si est le silicium, Nd le néodyme, Li le lithium, Et₂O est un éther et x un nombre entier allant de 0 à 3.

Selon une autre caractéristique avantageuse de l'invention, ledit complexe est isolable à l'état de monocristaux, ce qui permet notamment de l'analyser par la technique de diffraction des rayons X (voir l'annexe 1 jointe) pour l'obtention de données cristallographiques. Plus précisément, les Demanderesses ont pu établir que ces monocristaux du complexe B' selon l'invention sont arrangés selon un système de réseau monoclinique.

Ledit complexe selon l'invention est avantageusement obtenu par un procédé de préparation comprenant la réaction d'un sel de ligand de formule P-Cp₁Cp₂-L₂ et d'un tris(borohydrure) de lanthanide Ln dissous dans ledit solvant complexant et de formule Ln(BH₄)₃N₃.

De préférence, en relation avec la formule B' selon l'invention, ledit sel de ligand répond à la formule Me₂SiFlu₂-Li₂ et ledit tris(borohydrure) de lanthanide répond à la formule Nd(BH₄)₃(THF)₃.

Selon un mode de réalisation de l'invention, ce procédé de préparation comprend le coulage à température ambiante dudit sel de ligand dissous dans un autre solvant, tel que l'éther diéthylique, sur ladite solution de tris(borohydrure) de lanthanide à l'état dissous dans cet autre solvant, l'agitation à température ambiante de la solution, la filtration de la solution agitée, la concentration du filtrat et/ou le séchage du complexe, l'éventuel ajout d'un mauvais solvant au concentrat afin de faire précipiter le complexe.

Un système catalytique selon l'invention comprend, d'une part, ledit complexe métallocène borohydrure d'un lanthanide tel que défini ci-dessus et, d'autre part, ledit co-catalyseur choisi dans le groupe constitué par un alkyl magnésium, un alkyl lithium, un réactif de Grignard et un mélange d'un alkyl lithium et d'un alkyl aluminium.
Avantageusement, ledit co-catalyseur est le butyloctyl magnésium.

Comme indiqué ci-dessus, ce système catalytique selon l'invention permet avantageusement de copolymériser plusieurs oléfines, telles que des mono-oléfines et des dioléfines, ce que ne permettait aucun système catalytique de l'art antérieur à base d'un complexe métallocène de type borohydrure de lanthanide.

On notera également que ledit complexe métallocène borohydrure de lanthanide confère au système catalytique selon l'invention une activité catalytique encore plus élevée pour la copolymérisation d'une mono-oléfine, telle que l'éthylène, et d'un diène conjugué, tel que le butadiène, que celle procurée par le complexe métallocène halogéné du document précité WO-A-2004/035639 pour la même réaction de copolymérisation.

Un procédé de copolymérisation selon l'invention d'au moins deux monomères oléfinique, tel qu'une mono-oléfine et/ou une dioléfine, comprend une réaction dudit système catalytique en présence desdits monomères et, de préférence, cette réaction est mise en oeuvre en suspension ou en solution, dans un solvant hydrocarboné, tel que le toluène, et à une température comprise entre -20° C et 120° C.

Cette réaction peut être réalisée sous une pression variable, de préférence allant de 1 bar à 50 bars et, également à titre préférentiel, à une température de préférence comprise entre 20° C et 90° C.

A titre préférentiel, le procédé de copolymérisation comprend :
(i) la préparation préalable dudit système catalytique hors du milieu de polymérisation en faisant réagir ledit complexe avec ledit co-catalyseur, puis
(ii) la réaction du système catalytique obtenu en (i) en présence des monomères à polymériser.

En variante, on notera toutefois que le système catalytique pourrait être formé *in situ* dans le milieu de polymérisation.

Selon un exemple particulièrement avantageux de réalisation de l'invention, ce procédé comprend la copolymérisation de l'éthylène et du butadiène pour l'obtention d'un copolymère éthylène/ butadiène dans lequel :
- le taux molaire d'unités issues du butadiène est avantageusement supérieur à 10 % et, encore plus avantageusement, égal ou supérieur à 25 %, et dans lequel
- les unités issues du butadiène comprennent des enchaînements cycliques sous forme de 1,2-cyclohexane, outre les enchaînements usuels trans-1,4 et 1,2 (vinyliques).

Avantageusement, le taux molaire des enchaînements 1,2-cyclohexane dans les unités dudit copolymère qui sont issues du butadiène est égal ou supérieur à 20 % et, encore plus avantageusement, égal ou supérieur à 25 %. On notera que dans certains cas, ce taux d'enchaînements 1,2-cyclohexane peut même être supérieur à 35 %.

Selon une autre caractéristique de l'invention, on utilise un rapport molaire (co-catalyseur / complexe) inférieur ou égal à 10, et avantageusement inférieur ou égal à 5, pour l'obtention d'une masse moléculaire moyenne en nombre Mn dudit copolymère qui est égale ou supérieure à 50 000 g/mol.

Encore plus avantageusement, ce rapport molaire (co-catalyseur / complexe) est choisi inférieur ou égal à 2 et la copolymérisation est réalisée sous une pression égale ou supérieure à 8 bars, par exemple égale à 10 bars, pour l'obtention d'une masse moléculaire moyenne en nombre Mn dudit copolymère qui est égale ou supérieure à 200 000 g/mol.

Un copolymère d'éthylène et de butadiène selon l'invention, qui est susceptible d'être obtenu par le procédé de copolymérisation défini ci-dessus, présente à la fois avantageusement :
a) un taux molaire d'unités issues du butadiène qui est égal ou supérieur à 25 %, et
b) un taux molaire d'enchaînements 1,2-cyclohexane dans lesdites unités issues du butadiène qui est égal ou supérieur à 25 %.

Selon une autre caractéristique de l'invention, ce copolymère d'éthylène et de butadiène présente, outre les deux caractéristiques a) et b) précitées, une masse moléculaire moyenne en nombre Mn égale ou supérieure à 30 000 g/mol.

Avantageusement, ces copolymères selon l'invention présentent par ailleurs un indice de polymolécularité Ip qui est inférieur à 3,5 et, encore plus avantageusement, inférieur ou égal à 2,5. A l'instar des masses moléculaires Mn, les indices de polymolécularité Ip ont été déterminés dans la présente description par chromatographie d'exclusion stérique (voir l'annexe 2 jointe).

Les copolymères selon l'invention présentent de préférence une température de transition vitreuse Tg qui est inférieure à -10° C. Plus précisément, ces copolymères peuvent par exemple présenter une température Tg comprise entre -20° C et -50° C. Cette température Tg est mesurée dans la présente description par la technique de calorimétrie différentielle à balayage « DSC » (Differential Scanning Calorimetry). Plus précisément, ces analyses thermiques ont été effectuées sur un Calorimètre « SETARAM 131 ». Les échantillons ont subi deux montées en température de -100° C à 100° C à la vitesse de 10° C.min⁻¹. Les données de la seconde montée en température ont été utilisées pour déterminer les propriétés thermiques des polymères.

Les caractéristiques précitées de la présente invention, ainsi que d'autres, seront mieux comprises à la lecture de la description suivante de plusieurs exemples de réalisation de l'invention, ladite description étant réalisée en référence aux dessins joints, parmi lesquels :
la Fig. 1 illustre la formule chimique développée d'un complexe métallocène borohydrure d'un lanthanide selon l'invention,
la Fig. 2 illustre les divers enchaînements caractérisant l'insertion des unités issues du butadiène dans un copolymère d'éthylène et de butadiène préparé selon l'invention au moyen du complexe de la Fig. 1,
les Figs. 3 et 4 illustrent chacune la structure des monocristaux, observée par diffraction des rayons X, qui caractérise le complexe selon l'invention de la Fig. 1, et
la Fig. 5 est un spectre RMN ¹H relatif au complexe selon l'invention de la Fig. 1 où seuls les hauts champs sont représentés (le signal relatif aux BH₄ n'est pas représenté et apparaît vers 100 ppm).
la Fig. 6 illustre la formule chimique développée d'un autre complexe métallocène borohydrure lanthanide selon l'invention.
les Fig. 7 et 8 illustrent chacune la structure des monocristaux observée par diffraction des rayons X, qui caractérise le complexe selon l'invention de la Fig. 6 (les atomes de carbone des éthers ont été omis de la représentation pour une meilleure clarté).

Pour tous les exemples suivants, on a opéré sous argon et on a préalablement séché les solvants utilisés par réaction avec du sodium suivie d'une distillation, ou bien sur un tamis moléculaire de 3 Å sous balayage d'argon.

On a analysé l'ensemble des complexes métallocènes synthétisés ci-après par RMN ¹H dans le THF-d8 à la température de 22°C, en utilisant un spectromètre « BRUKER DRX 300 » à la fréquence de 300 MHz et en outre, pour le complexe borohydrure selon l'invention, par la technique de diffraction des rayons X décrite à l'annexe 1 jointe.

On a déterminé la microstructure de chaque copolymère obtenu dans ces exemples par les techniques de RMN¹H et de RMN¹³C. On a utilisé à cet effet un spectromètre de dénomination « BRUKER DRX 400 », à des fréquences de 400 MHz pour la technique de RMN¹H et de 100,6 MHz pour celle de RMN¹³C. L'acquisition des spectres a été effectuée à l'aide d'une sonde « QNP » de 5 mm à la température de 363 K. On a utilisé à titre de solvant un mélange tétrachloroéthylène/ perdeuterobenzène (rapport volumique 2: 1).

### 1) Synthèse d'un complexe 1 de type métallocène borohydrure de lanthanide selon l'invention de formule [Me₂SiFlu₂Nd(BH₄)₂Li(THF)]₂ :

a) On a synthétisé un sel de formule Me₂SiFlu₂Li₂ (Me et Flu étant respectivement un groupe méthyle et un groupe fluorényle non substitué), comme décrit dans le document de brevet EP-A-1 092 731.
   A cet effet, on a synthétisé dans un premier temps un composé de formule Me₂Si(C₁₃H₉)₂. Pour ce faire, on a agité à reflux dans du THF et pendant une nuit 18 mmol de C₁₃H₁₀ et 18 mmol d'hydrure de sodium. On a ajouté ensuite à ce mélange 8,1 mmol de Cl₂SiMe₂, puis on a agité la solution obtenue pendant 3 heures et à température ambiante. On a ensuite évaporé une partie du THF, puis on a ajouté de l'heptane: On a hydrolysé la phase organique obtenue et on l'a extraite à plusieurs reprises par une solution aqueuse saturée en NH₄Cl. Puis on a évaporé le solvant et, après séchage sous vide à 60° C de l'extrait, on a récupéré finalement ledit composé de formule Me₂Si(C₁₃H₉)₂.
   On a ensuite agité à température ambiante, pendant une nuit dans du toluène puis pendant 3 heures à 50° C, 4,4 mmol de ce composé de formule Me₂Si(C₁₃H₉)₂ et 13 mmol de BuLi. On a obtenu un précipité constitué d'un sel répondant de formule Me₂SiFlu₂Li₂, que l'on a lavé à l'heptane puis que l'on a séché sous vide.
b) on a synthétisé par ailleurs le borohydrure de néodyme de formule Nd(BH₄)₃(THF)₃, comme décrit dans l'article de S. M. Cendrowski-Guillaume, G. Le Gland, M. Nierlich, M. Ephritikhine, Organometallics 2000, 19, 5654-5660.
c) On a alors synthétisé le complexe 1 selon l'invention de la manière suivante.

On a coulé à température ambiante 515 mg (1,3 mmol) du sel Me₂SiFlu₂Li₂, dissous dans 75 ml d'éther diéthylique, sur une solution contenant 521 mg de Nd(BH₄)₃(THF)₃ (1,3 mmol) dissous dans 75 ml d'éther diéthylique.

On a agité la solution obtenue pendant 12 heures à température ambiante, on l'a filtrée puis on a concentré le filtrat obtenu jusqu'à un volume total de 125 ml. On a ensuite coulé 200 ml de pentane sous agitation. Après apparition d'un trouble diffus, on a arrêté l'agitation.

Des cristaux rouge foncé (360 mg, 0,56 mmol) se sont formés après 12 heures au repos.

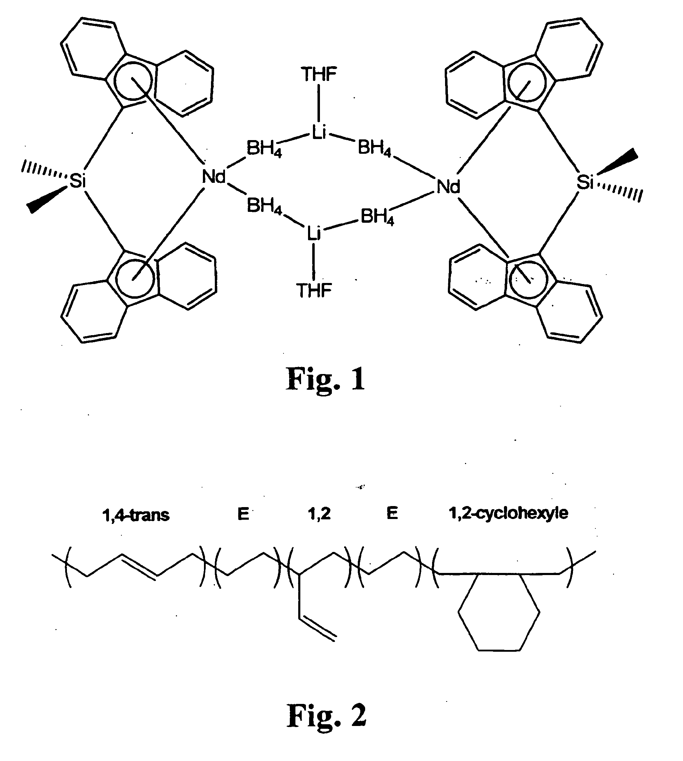

Ainsi, cette réaction à température ambiante a conduit au complexe 1 de néodyme selon l'invention de formule brute [Me₂SiFlu₂Nd(BH₄)₂Li(THF)]₂, la formule développée étant illustrée à la Fig. 1. On a isolé ce complexe 1 sous la forme de monocristaux avec un rendement de 45 %.

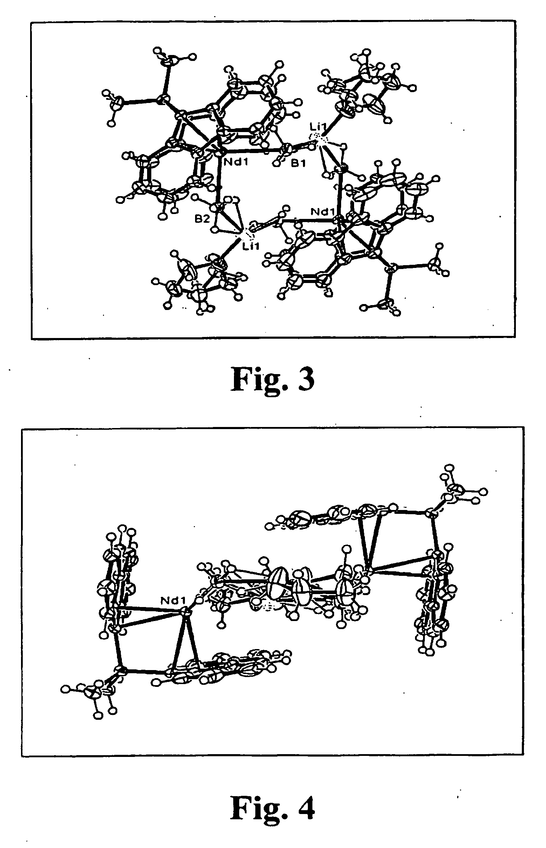

On a caractérisé ces monocristaux du complexe 1 par diffraction des rayons X et par RMN ¹H, comme cela est illustré aux Figs. 3 et 4 et à l'annexe 1 jointe, qui indique notamment que ces monocristaux sont agencés suivant le système de réseau monoclinique.

Comme cela ressort de la caractérisation par diffraction des rayons X (Fig. 3 et Fig. 4), le complexe 1 selon l'invention de formule brute [Me₂SiFlu₂Nd(BH₄)₂Li(THF)]₂ se présente sous la forme d'un dimère.

La masse molaire M₁ du dimère est égale à 1279,10 g.mol⁻¹. L'analyse par RMN ¹H du proton confirme la structure de ce complexe 1 et l'on a proposé l'attribution suivante pour ce complexe 1 :
(THF-d8, 22°C) : 97,5 ppm, 8H, BH₄; 13,15 ppm, 6H, Si(CH₃)₂ ; 5 ppm, 4H, Flu ; -2,35 ppm, 2*4H, Flu.

### 2) Synthèse d'un complexe 2 « témoin » de l'état antérieur de la technique de type métallocène halogéné de lanthanide de formule [Me₂SiFlu₂]NdCl :

On a coulé à température ambiante 1090 mg (2,8mmol) de Me₂SiFlu₂Li₂, dissous dans 50 ml de THF, sur une solution contenant 620 mg (2,5 mmol) de NdCl₃ dans 100 ml de THF (la suspension de NdCl₃ a été préalablement chauffée à reflux pendant 12 heures). On a porté le mélange au reflux pendant 12 heures, puis on a évaporé le solvant. On a extrait le produit au toluène et l'on a éliminé un sel par filtration. On a obtenu 1390 mg (2,4 mmol) de complexe brut après évaporation du filtrat, le chloro (µ-diméthylsilyl)bis(η₅-fluorényl) néodyme de formule [Me₂SiFlu₂]NdCl et de masse molaire M = 566,27 g/mol.

Cette réaction a nécessité de porter le milieu réactionnel au reflux et a conduit au complexe 2 isolé sous la forme d'un produit brut. L'analyse par diffraction des rayons X de ce complexe 2 n'a pas été possible, car des monocristaux n'ont pas pu être obtenus pour ce complexe 2. En raison du paramagnétisme du néodyme, aucun signal relatif au complexe 2 n'a pu être observé par RMN ¹H que ce soit dans le THF-d8 ou dans la pyridine-d5.

### 3) Essais de copolymérisation à basse pression (pression initiale = 4 bars):

On a utilisé chacun de ces deux complexes 1 et 2 en association avec du butyloctyl magnésium (« BOMAG » en abrégé) à titre de co-catalyseur d'alkylation, pour la copolymérisation de l'éthylène et du butadiène. On a préparé chaque système catalytique 1 et 2 - respectivement selon l'invention et « témoin » - en procédant à une activation préalable du complexe 1 ou 2 correspondant par le co-catalyseur « BOMAG », selon un rapport molaire (co-catalyseur Mg / complexe Nd) variant de 1,9 à 10,4, la durée d'activation étant :
- de 15 min. pour les essais 3-1, 3-2, 3-3 et 3-6,
- de 12 h pour l'essai 3-4, et
- d' 1 h pour l'essai 3-5.

Les polymérisations se sont déroulées dans un réacteur en verre de 250 ml, dans 200 ml de toluène à une température de 80° C et à une pression initiale de 4 bars. On a introduit les monomères dans le milieu sous la forme d'un mélange gazeux à 30 % de butadiène.

Après un temps t (min.) de réaction, la copolymérisation est stoppée par refroidissement et dégazage du réacteur, puis le copolymère est obtenu par précipitation dans du méthanol. Après séchage, on obtient une masse m (g) de copolymère.

Les résultats des différents essais sont reportés dans les tableaux 1 à 3 ci-après.

**Tableau 1 : conditions de polymérisation**

| **Essais** | **Complexe** | Complexe en mg | [Nd]µmol .L⁻¹ | [Mg] en µmol.L⁻¹ | [Mg] / [Nd] | Masse copolymère m en g | Durée en min. |
|---|---|---|---|---|---|---|---|
| **3-1** | **1** | 10,0 | 78 | 266 | 3,4 | 1,10 | 60 |
| **3-2** | **1** | 26,9 | 210 | 1064 | 5,1 | 11,00 | 180 |
| **3-3** | **1** | 13,1 | 102 | 1064 | 10,4 | 7,5 | 180 |
| **3-4** | **1** | 13,0 | 102 | 1064 | 10,4 | 7,8 | 180 |
| **3-5** | **1** | 27,7 | 217 | 418 | 1,9 | 12,6 | 180 |
| **3-6** | **2 (témoin)** | 33,0 | 194 | 388 | 2 | 8,50 | 240 |

**Tableau 2 : Activités des complexes et macrostructure des copolymères**

| **Essais** | Activité en g.mol⁻¹.h⁻¹ | Activité en g.g⁻¹.h⁻¹ | Mn en g.mol⁻¹ | Ip | Tg en°C |
|---|---|---|---|---|---|
| **3-1** | 70 500 | 110 | 50 800 | 2,59 | -40,2 |
| **3-2** | 87 300 | 136 | 46 150 | 1,60 | -36,0 |
| **3-3** | 122 550 | 191 | 33 300 | 1,68 | -35,3 |
| **3-4** | 127 450 | 200 | 37 400 | 1,69 | -37,1 |
| **3-5** | 96 800 | 152 | 74850 | 1,54 | -33,0 |
| **3-6 (témoin)** | 36 500 | 64 | 110 000 | 2,30 | -37,0 |

où les colonnes exprimées en g.mol⁻¹.h⁻¹ et en g.g⁻¹.h⁻¹ indiquent le nombre de grammes de copolymère obtenu par mole (respectivement par gramme) de complexe et par heure, constituant ainsi des indicateurs de l'activité catalytique des complexes 1 et 2.

**Tableau 3 : Caractérisation par RMN ¹³C de la microstructure des copolymères**

| **Essais** | % molaire unités butadiène | % molaire enchaînements 1,4-trans | % molaire enchaînements 1,2 | % molaire enchaînements 1,2-cyclohexane |
|---|---|---|---|---|
| **3-2** | 26,7 | 31,8 | 35,2 | 33,0 |
| **3-3** | 28,0 | 32,3 | 38,9 | 28,8 |
| **3-4** | 28,4 | 32,1 | 38,8 | 29,1 |
| **3-5** | 25,3 | 31,9 | 31,9 | 36,1 |
| **3-6 (témoin)** | 19,3 | 28,9 | 27,9 | 43,2 |

La Fig. 2 illustre de manière schématique les divers enchaînements observés pour l'insertion des unités butadiène au sein des copolymères éthylène / butadiène ainsi préparés.

Au vu du tableau 2, il apparaît que le complexe 1 métallocène borohydrure de lanthanide selon l'invention, une fois alkylé par le co-catalyseur, présente une activité catalytique en g.g⁻¹.h⁻¹ très supérieure à celle du complexe 2 « témoin », qui est au moins sensiblement doublée, voire triplée (cf. essais 3-3 et 3-4) en comparaison de celle de ce complexe « témoin » de type métallocène halogéné de lanthanide (cf. essai 3-6).

Au vu du tableau 3, il apparaît que ce complexe 1 selon l'invention permet d'obtenir des copolymères éthylène / butadiène dans lesquels les unités issues du butadiène sont présentes selon un taux molaire supérieur à 25 % et comprennent toujours des enchaînements 1,2-cyclohexane, des unités issues du butadiène, selon un taux molaire relativement élevé qui est égal ou supérieur à 25 %, voire à 30 %.

Ainsi, l'essai 3-4 selon l'invention conduit à l'obtention d'un copolymère comportant 28,4 % d'unités issues du butadiène, dont 29,1 % d'enchaînements 1,2-cyclohexane, avec une activité catalytique de 200 g.g⁻¹.h⁻¹ pour le complexe 1 utilisé contre seulement 64 g.g⁻¹.h⁻¹ pour le complexe 2 « témoin ».

En outre, l'essai 3-5 selon l'invention montre qu'il est possible d'obtenir une masse molaire moyenne en nombre Mn relativement élevée pour le copolymère d'éthylène / butadiène (supérieure à 70 000 g/mol) en choisissant un rapport molaire (co-catalyseur / complexe) inférieur à 2.

### 4) Essais de copolymérisation à pression élevée (pression initiale = 10 bars):

On a utilisé chacun des deux complexes 1 et 2 en association avec du « BOMAG » à titre de co-catalyseur d'alkylation et selon un même rapport molaire (co-catalyseur Mg / complexe Nd) égal à 2, pour la copolymérisation de l'éthylène et du butadiène. On a préparé chaque système catalytique 1 et 2 - respectivement selon l'invention et « témoin » - en procédant à une activation préalable du complexe 1 ou 2 correspondant par le co-catalyseur « BOMAG » pendant une durée de 15 min.

Les polymérisations se sont déroulées dans un réacteur métallique en acier inoxydable de 1 litre, dans 600 ml de toluène à 80° C et à une pression initiale de 10 bars. On a introduit les monomères butadiène et éthylène (« Bd » et « E » en abrégé, respectivement) dans le milieu en faisant varier la fraction de butadiène dans le mélange gazeux d'alimentation (« alim » en abrégé).

Les résultats des différents essais sont reportés dans les tableaux 4 à 6 ci-après.

**Tableau 4 : Conditions de polymérisation**

| **Essais** | **Complexe** | Complexe en mg | [Nd] en µmol.L⁻¹ | Bd en g | E en g | % Bd alim. | Masse copolymère meng | Durée de polym. |
|---|---|---|---|---|---|---|---|---|
| **4-1** | **1** | 33,3 | 87 | 8,1 | 24,95 | 14,4 | 25,6 | 1h00 |
| **4-2** | **1** | 34,0 | 88 | 22,6 | 24,35 | 32,5 | 31,7 | 2h45 |
| **4-3** | **2 (témoin)** | 22,0 | 65 | 8 | ≈ 25 | ≈ 14 | 5,9 | 3h00 |
| **4-4** | **2 (témoin)** | 47,2 | 138 | 18 | ≈ 25 | ≈ 30 | 15,8 | 2h20 |

**Tableau 5 : Activités des complexes et macrostructure des copolymères:**

| **Essais** | Activité en g.mol⁻¹.h⁻¹ | Activité en g.g⁻¹.h⁻¹ | Mn en g.mol⁻¹ | Ip | Tg en ° C |
|---|---|---|---|---|---|
| **4-1** | 492300 | 769 | 297 000 | 3,16 | -36,0 |
| **4-2** | 217 500 | 339 | 281 000 | 1,92 | -45,6 |
| **4-3 (témoin)** | 50 400 | 89 | 378 600 | 2,8 | -43,2 |
| **4-4 (témoin)** | 81 600 | 143 | 70 700 | 2,0 | -45,7 |

où les colonnes exprimées en g.mol⁻¹.h⁻¹ et en g.g⁻¹.h⁻¹ indiquent également le nombre de grammes de copolymère obtenu par mole (respectivement par gramme) de complexe et par heure, constituant ainsi des indicateurs de l'activité catalytique des complexes 1 et 2.

**Tableau 6 : Caractérisation par RMN ¹H de la microstructure des copolymères**

| **Essais** | % molaire Bd en alimentation | % molaire Bd dans copolymère | % molaire enchaînements 1,4-trans | % molaire enchaînements 1,2 | % molaire 1,2-cyclohexane |
|---|---|---|---|---|---|
| **4-1** | 14,4 | 12,9 | 25,3 | 39,6 | 35,1 |
| **4-2** | 32,5 | 30,8 | 29,6 | 50,3 | 20,2 |
| **4-3 (témoin)** | ≈ 14 | 20 | 26,7 | 44,5 | 28,8 |
| **4-4 (témoin)** | ≈ 30 | 30,4 | 27,8 | 53,5 | 18,7 |

Au vu du tableau 5, il apparaît que le complexe 1 métallocène borohydrure de lanthanide selon l'invention, une fois alkylé par le co-catalyseur, présente une activité catalytique en g.g⁻¹.h⁻¹ très supérieure à celle du complexe 2 « témoin », qui est plus que doublée, voire plus que quintuplée (cf. essais 4-1 et 4-2) en comparaison de celle de ce complexe « témoin » de type métallocène halogéné de lanthanide (cf. essais 4-3 et 4-4).

Au vu du tableau 6, il apparaît que ce complexe 1 selon l'invention permet d'obtenir des copolymères éthylène / butadiène dans lesquels les unités issues du butadiène sont présentes selon un taux molaire supérieur à 10 %, voire à 30 %, et comprennent toujours des enchaînements 1,2-cyclohexane selon un taux molaire relativement élevé qui est supérieur à 20 %, voire à 30 %.

Ainsi, l'essai 4-2 selon l'invention conduit à l'obtention d'un copolymère comportant 30,8 % d'unités issues du butadiène, dont 20,2 % d'enchaînements 1,2-cyclohexane, avec une activité catalytique de 339 g.g⁻¹.h⁻¹ pour le complexe 1 utilisé contre seulement 143 g.g⁻¹.h⁻¹ pour le complexe 2 « témoin » testé à l'essai 4-4 réalisé dans des conditions de polymérisation similaires à celles de l'essai 4-2, du fait d'une alimentation en butadiène d'environ 30 % (cf. tableau 4).

On notera également que ces polymérisations à haute pression (10 bars), associées à un rapport molaire (co-catalyseur Mg / complexe Nd) réduit (égal à 2) permettent au complexe 1 de l'invention de conférer au copolymère obtenu à l'essai 4-2 une masse molaire Mn (supérieure à 281 000 g/mol) très supérieure à celle procurée par le complexe 2 « témoin » (70 700 g/mol) dans les conditions similaires de l'essai 4-4.

En conclusion, le complexe 1 métallocène borohydrure de lanthanide selon l'invention permet de préparer des copolymères de l'éthylène et du butadiène présentant des motifs 1,2-cyclohexane avec des activités catalytiques très élevées, qui sont les plus importantes connues à ce jour à la connaissance des Demanderesses.

### 5) Essai d'homopolymérisation à basse pression (pression initiale = 4 bars)

On a utilisé le complexe 1 en association avec du butyloctyl magnésium (« BOMAG » en abrégé) à titre de co-catalyseur d'alkylation, pour la polymérisation de l'éthylène. On a préparé le système catalytique selon l'invention en procédant à une activation préalable du complexe 1 par le co-catalyseur « BOMAG », selon un rapport molaire (co-catalyseur Mg / complexe Nd) de 10,4, la durée d'activation étant de 15 min.

La polymérisation s'est déroulée dans un réacteur en verre de 250 ml, dans 200 ml de toluène à une température de 80 °C et à une pression de 4 bars.

Après 25 minutes de réaction, la polymérisation est stoppée par refroidissement et dégazage du réacteur, puis le polymère est obtenu par précipitation dans du méthanol. Après séchage, on obtient 7,1 g de polyéthylène, ayant une Mn = 7700 g/mol⁻¹ et un indice de polymolécularité Ip = 1,98.

| Essais | Complexe | Complexe en mg | [Nd] µmol.L⁻¹ | [Mg] en µmol.L⁻¹ | [Mg] / [Nd] | Masse homopolymère M en g | Durée en min. |
|---|---|---|---|---|---|---|---|
| 5-1 | 1 | 13,1 | 102 | 1065 | 10,4 | 7,1 | 25 |

Le complexe 1 métallocène borohydrure de lanthanide selon l'invention, une fois alkylé par le co-catalyseur, présente une activité catalytique en g.mol⁻¹.h⁻¹ de 831900 g.mol⁻¹.h⁻¹.

### 6) Synthèse d'un complexe 3 de type métallocène borohydrure de lanthanide selon l'invention de formule Me₂SiFlu'₂Nd(BH₄)₂Li(éther)₃ (Flu' = 2,7-'Bu₂C₁₃H₆)

a) On a synthétisé un sel de formule [Me₂SiFlu'₂]Li₂(THF)₂ (Me et Flu' étant respectivement un groupe méthyle et le ligand 2,7-ditertiobutylfluorényle).
   A cet effet, on a synthétisé dans un premier temps un composé de formule [2,7-^{t}Bu₂C₁₃H₇][Li]. On a coulé 17,8 ml d'une solution de BuLi (1,6M, 28,4 mmol) sur une solution de 2,7-^{t}Bu₂C₁₃H₈ (7,54 g, 27,1 mmol) dans le toluène (50 ml). Le mélange a été agité 15 heures à température ambiante puis porté à 60°C pendant 2 heures. Le sel qui précipite est récupéré par filtration. [2,7-^{t}Bu₂C₁₃H₇][Li] est ensuite lavé à l'heptane, puis séché sous vide (5;88g; 76%).
   3,64 g de [2,7-^{t}Bu₂C₁₃H₇][Li] (12,8 mmol) sont dissous dans du THF (150 ml). La solution est refroidie à -50°C puis SiMe₂Cl₂ est ajouté (6,4 mmol). Le mélange est ramené à la température ambiante, puis est agité 15 heures. Le THF est évaporé puis le produit est extrait avec 50 ml de toluène. Le solvant est évaporé pour donner un solide beige de formule Me₂Si(2,7-^{t}Bu₂C₁₃H₇)₂. Le composé Me₂Si(2,7-^{t}Bu₂C₁₃H₇)₂ est ensuite dissous dans 50 ml de THF. La solution est refroidie à 0°C puis 8,0 ml d'une solution de BuLi (1,6 M, 12,8 mmol) sont additionnés. Le mélange est ramené à la température ambiante, puis est agité 15 heures. Le THF est évaporé et le produit est lavé à l'heptane froid. On obtient 4.8 g de sel dilithié [Me₂Si(2,7-^{t}Bu₂C₁₃H₆)₂]Li₂(THF)₂ (97%).
   Le produit a été caractérisé par RMN du proton et sa formule brute est : [Me₂Si(2,7-^{t}Bu₂C₁₃H₆)₂]Li₂(THF)₂ (M = 769,10 g.mol⁻¹).
   Les attributions sont :
   RMN ¹H (THF-d8, 22°C) : 0,96 ppm (s, 6H, SiMe₂); 1,39 ppm (s, 36H, *t*-Bu); 1,78 et 3,62 ppm (m, 2*8H, 2*THF) ; 6,65 ppm (d, J = 8 Hz, 4H, FluH) ; 7,78 ppm (d, J = 8 Hz, 4H, FluH) ; 8,02 ppm (s, 4H, FluH).
b) on a synthétisé par ailleurs le borohydrure de néodyme de formule Nd(BH₄)₃(THF)₃, comme décrit dans l'article de S. M. Cendrowski-Guillaume, G. Le Gland, M. Nierlich, M. Ephritikhine, Organometallics 2000, 19, 5654-5660.
c) On a alors synthétisé le composé 3 selon l'invention de la manière suivante :
   On a coulé à température ambiante le sel [Me₂Si(2,7-^{t}Bu₂C₁₃H₆)₂]Li₂(THF)₂ (6,4 mmol) dissous dans 75 ml de THF sur une solution contenant 2,59 g (6,4 mmol) de Nd(BH₄)₃(THF)₃ dissous dans 75 ml de THF. Le mélange est maintenu sous agitation pendant 15 heures puis le solvant est évaporé. Un résidu de couleur marron-rouge est obtenu. On ajoute ensuite de l'éther diéthylique (175 ml). La solution obtenue est filtrée puis le filtrat est concentré jusqu'à un volume total de 75 ml environ (apparition d'un trouble). On ajoute alors sous agitation 75 ml de pentane. L'agitation est coupée et on laisse reposer la solution. Des cristaux se forment ainsi qu'une huile. On prélève le surnageant et on sèche longuement sous vide. On obtient un résidu solide mélangé à des cristaux. (2,45 g).

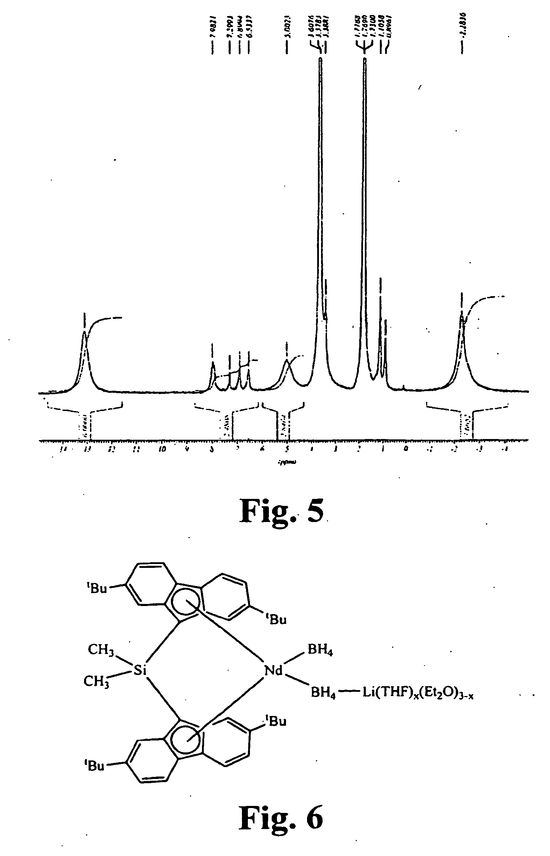

Ainsi, cette réaction à température ambiante a conduit au complexe 3 de néodyme selon l'invention de formule brute [Me₂Si(Flu')₂Nd (BH₄)₂Li(éther)₃], la formule développée étant illustrée à la Figure 6.

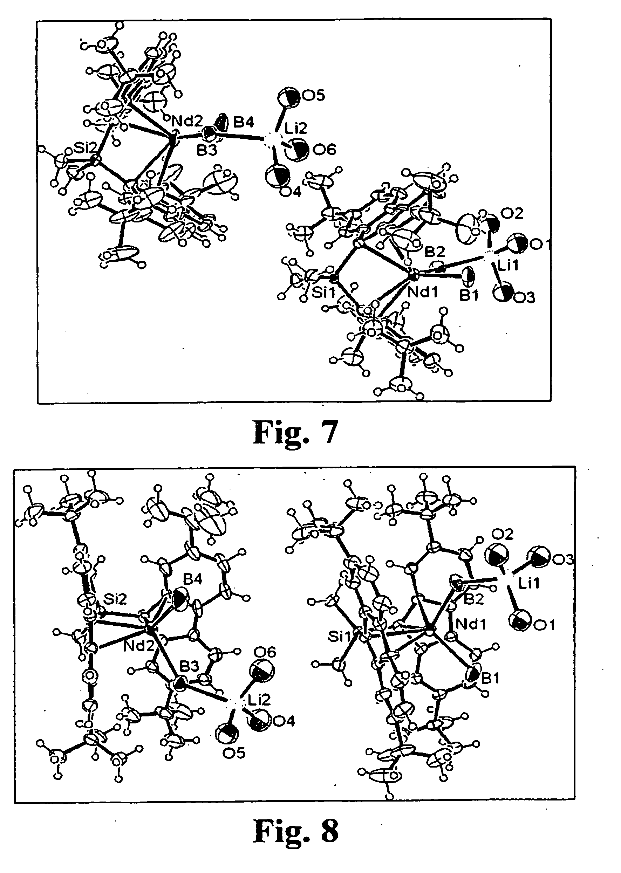

On a caractérisé les monocristaux du complexe 3 par diffraction des rayons X, comme cela est illustré sur les figures 7 et 8, qui indique notamment que les cristaux sont agencés suivant le système de réseau triclinique. Le complexe 3 selon l'invention se présente par ailleurs sous la forme monomère et la maille élémentaire contient deux complexes cristallographiquement indépendants.

Sa masse molaire M₃ est comprise entre 1008 et 1012 g.mol⁻¹ selon que les molécules d'éther de la structure soient du THF, de l'éther diéthylique ou un mélange des deux.

### 7) Essais de copolymérisation à basse pression

On a utilisé le complexe 3 en association avec du butyloctylmagnésum (« BOMAG » en abrégé) à titre de co-catalyseur d'alkylation, pour la copolymérisation de l'éthylène et du butadiène. On a préparé chaque système catalytique 3 en procédant à une activation préalable du complexe 3 par le co-catalyseur « BOMAG », selon un rapport molaire (co-catalyseur Mg / complexe Nd) égal à 5, la durée d'activation étant de 15 min. pour l'ensemble des essais 7-1 à 7-5.

Les polymérisations se sont déroulées dans un réacteur en verre de 250 ml, dans 200 ml de toluène à la température de 80°C et à une pression initiale de 4 bars ou 2 bars dans le cas de l'essai 6-5. On a introduit les monomères dans le milieu sous la forme de mélanges gazeux comprenant de 10, 20 et 30% de butadiène.

Après un temps t (min.) de réaction, la polymérisation est stoppée par refroidissement et dégazage du réacteur, puis le copolymère est obtenu par précipitation dans du méthanol. Après séchage on obtient une masse m (g) de polymère.

**Tableau 7 : Conditions de polymérisation (complexe 3)**

| **Essais** | Complexe en mg | [Complexe] en µmol.L⁻¹ | [Mg] en µmol.L⁻¹ | % Bd alim. | Pfinale en bar | Masse copolymère m en g | Durée de polym. |
|---|---|---|---|---|---|---|---|
| **7-1** | 50,0 | 247 | 1235 | 30 | 2,8 | 7,61 | 4h00 |
| **7-2** | 49,6 | 246 | 1230 | 30 | 2,7 | 7,66 | 4h00 |
| **7-3** | 54,4 | 269 | 1345 | 20 | 4 | 9,74 | 2h10 |
| **7-4** | 51,8 | 256 | 1280 | 10 | 4 | 9,19 | 1h40 |
| **7-5** | 55,0 | 272 | 1370 | 10 | 2 | 8,90 | 6h20 |

**Tableau 8 : Activités du complexe 3 et macrostructure des copolymères**

| **Essais** | Activité en g.mol⁻¹.h⁻¹ | Activité en g.g⁻¹.h⁻¹ | Mn en g.mol⁻¹ | Ip | Tg en ° C |
|---|---|---|---|---|---|
| **7-1** | 38 400 | 38 | 31 600 | 1,69 | -28,3 |
| **7-2** | 38 900 | 39 | 29 550 | 1,50 | -28,2 |
| **7-3** | 83 300 | 82 | 26 950 | 1,52 | -35,7 |
| **7-4** | 107300 | 106 | 11885 | 1,65 | -33,6 |
| **7-5** | 25 750 | 26 | 1 600 | 1,56 | - |

**Tableau 9 : Caractérisation par RMN ¹³C de la microstructure des copolymères**

| **Essais** | % molaire unités Bd en alim. | % molaire unités Bd dans copolymère | % mol. enchaîn. 1,4*-trans* | % mol. enchaîn. 1,2 | % mol. enchaîn. Cy-1,2-T | % mol. enchaîn. Cy-1,2-C | % mol. enchaîn. Cy-1,4 |
|---|---|---|---|---|---|---|---|
| **7-1** | 30 | 32,1 | 21,5 | 57,5 | 19,0 | 1,9 | |
| **7-3** | 20 | 21,6 | 19,2 | 32,8 | 34,3 | 4,2 | 9,6 |
| **7-4** | 10 | 12,8 | 17,5 | 20,2 | 41,9 | 5,5 | 14,7 |
| **7-5** | 10 | 10,2 | 25,4 | 7,6 | 45,9 | 5,2 | 15,9 |

| | | | | | | | |
|---|---|---|---|---|---|---|---|
| * Le signal αCy-1,4 n'a pas pu être intégré en raison de sa faible intensité et de la superposition de nouveaux petits signaux. On peut estimer que le taux des unités 1,4-cyclohexane représente moins de 5% des unités butadiène insérées. | | | | | | | |

Dans le tableau 9 :

| | | |
|---|---|---|
| Cy-1,2-T | signifie unités cyclohexane-1,2-trans | dans la chaîne de copolymère |
| Cy-1,2-C | signifie unités cyclohexane-1,2-cis | dans la chaîne de copolymère |
| Cy-1,4 | signifie unités cyclohexane-1,4 | dans la chaîne de copolymère |

Le copolymère obtenu à l'aide du complexe 3 présente des unités issues du butadiène comprenant des enchaînements sous forme de 1,4-cyclohexane et 1,2-cyclohexane.

### ANNEXE 1:

### Analyse du complexe métallocène borohydrure de lanthanide selon l'invention par la technique de diffraction des rayons X :

L'analyse par diffraction des rayons X a été effectuée sur un diffractomètre en utilisant une source MoKα munie d'un monochromateur en graphite (longueur d'onde égale à 0,71069 Å) à la température de 150 K.

En boîte à gants, sous atmosphère d'argon, les cristaux de l'échantillon ont été transférés dans une boîte de Pétri et recouvert de Paratone-N (Hampton Research). Un petit fragment a ensuite été découpé et analysé à l'aide d'un diffractomètre « KappaCCD» de dénomination « Bruker-AXS»; La mesure des intensités diffractées a été réalisée à 150 K avec le logiciel « Collect » en balayage φ et ω à la longueur d'onde Kα du molybdène. L'intégration des images obtenues et la mise à l'échelle des intensités ont été effectuées avec la suite « DenZo-SMN ».

La structure a été résolue par méthodes directes :
- par le programme « SIR97 », cf. l'article de A. Altomare, M.C. Burla, M. Camalli, G. Cascarano, C. Giacovazzo, A. Guagliardi, A.G.G. Moliterni, G. Polidori, R. Spagna, SIR97, an integrated package of computer programs for the solution and refinement of crystal structures using single crystal data, et
- par l'affinage par moindres-carrés, avec le programme « SHELXL, cf. l'article de G.M. Sheldrick: SHELXL-97, Universität Göttingen, Göttingen, Allemagne, 1997.

Les données cristallographiques sont résumées dans le tableau ci-après.

### Données cristallographiques du complexe 1 métallocène borohydrure de lanthanide :

| | |
|---|---|
| Formule moléculaire | C₃₂H₃₈B₂LiNdOsi |
| Masse moléculaire | 639,51 g/mol |
| Faciès cristallin | Bloc orange |
| Dimensions des cristaux (mm) | 0,22x0,22x0,18 |
| Système cristallin | Monoclinique |
| Groupe spatial | P2₁/c |
| a(Å) | 10,4230(10) |
| b(Å) | 14,5290(10) |
| c(Å) | 19,5760(10) |
| α(°) | 90,00 |
| β(°) | 100,8500(10) |
| γ(°) | 90,00 |
| V(Å³) | 2911,5(4) |
| Z | 4 |
| d(g-cm⁻³) | 1,459 |
| F(000) | 1300 |
| µ(cm⁻¹) | 1,848 |
| Corrections d'absorption | Multi-balayage ; 0,6866 min, 0,7321 max |
| Diffractomètre utilisé | "KappaCCD" |
| Source de rayons X | MoKa |
| λ(Å) | 0,71069 |
| Monochromateur | Graphite |
| T (K) | 150,0(1) |
| Mode de balayage | Balayages phi et oméga |
| θ Maximum | 30,02 |
| Plages "HKL" | -1414;-1820;-2727 |
| Réflexions mesurées | 13551 |
| Données uniques | 8443 |
| "Rint" | 0,0192 |
| Réflexions utilisées | 6770 |
| Critère | 1 > 2σI) |
| Type d'affinage | Fsqd |
| Atomes d'hydrogène | Mélangés |
| Paramètres affinés | 373 |
| Réflexions / paramètre | 18 |
| wR2 | 0,0841 |
| R1 | 0,0317 |
| Masses a, b | 0,0454 ; 0,0000 |
| GoF | 1,033 |
| Pic de différence / trou (e Å⁻³) | 1,747(0,094) / -0,901 (0,094) |

### ANNEXE 2:

### Analyse par Chromatographie d'Exclusion Stérique des copolymères :

a) Pour les copolymères solubles à température ambiante dans le tétrahydrofuranne (THF), on a déterminé les masses molaires par chromatographie d'exclusion stérique dans le THF. On a injecté les échantillons à l'aide d'un injecteur « Waters 717 » et d'une pompe « Waters 515 HPLC » à un débit de 1 ml.min⁻¹ dans une série de colonnes « Polymer Laboratories ».
   Cette série de colonnes, placée dans une enceinte thermostatée à 45° C, est composée de :
   - 1 précolonne PL Gel 5 µm,
   - 2 colonnes PL Gel 5 µm Mixte C,
   - 1 colonne PL-Gel 5 µm-500 Å.

   On a réalisé la détection à l'aide d'un réfractomètre « Waters 410 ».
   On a déterminé les masses molaires par calibration relative en utilisant des étalons de polystyrène certifiés par « Polymer Laboratories ».
   Sans être une méthode absolue, la SEC permet d'appréhender la distribution des masses moléculaires d'un polymère. A partir de produits étalons commerciaux, les différentes masses moyennes en nombre (Mn) et en poids (Mw) peuvent être déterminés et l'indice de polymolécularité calculé (Ip = Mw/Mn).
b) Pour les copolymères insolubles à température ambiante dans le tétrahydrofuranne, les masses molaires ont été déterminées dans le 1,2,4-trichlorobenzène. On les a tout d'abord dissous à chaud (4 h 00 à 150° C), puis on les a injectés à 150° C avec un débit de 1 ml.min⁻¹ dans un chromatographe « Waters Alliance GPCV 2000 » équipé de trois colonnes « Styragel » (2 colonnes « HT6E » et 1 colonne « HT2 »).
   On a effectué la détection à l'aide d'un réfractomètre « Waters ».
   On a déterminé les masses molaires par calibration relative en utilisant des étalons polystyrène certifiés par « Polymer Laboratories ».

### ANNEXE 3

### Détermination par RMN ¹H et ¹³C de la microstructure des unités butadiène insérées dans les copolymères d'éthylène et de butadiène.

L'analyse spectroscopique RMN haute résolution a été réalisée avec un spectromètre de dénomination Bruker DRX 400 à des fréquences de 400 MHz pour l'observation du ¹H et 100.6 MHz pour l'observation du ¹³C. Les spectres 1D ont été obtenus avec une sonde 5-mm QNP à la température 363K. Pour les spectres 2D, une sonde large bande avec un gradient de champ suivant l'axe z a été utilisée. Les corrélations ¹H-¹H ont été déterminées avec une séquence COSY-GS et les corrélations ¹H-¹³C avec les séquences HMQC-GS et HMBC-GS. Un mélange de tétrachloroéthylène (TCE) et perdeutérobenzene (C6D6) (rapport 2/1 en volume) a été utilisé comme solvant. Les concentrations de polymère pour l'analyse sont comprises entre 10 et 15% (w/w). Les déplacements chimiques (δ) sont donnés en ppm en prenant comme référence interne le tétraméthylsilane (TMS) ; en l'absence de TMS la résonance du polyéthylène ("PE" à δ= 30.06 ppm) est utilisée en tant que référence interne.

### NOTATIONS

Dans l'ensemble des schémas et des tableaux de cette annexe, les symboles suivants ont été utilisés :
T : unité butadiène ou isoprène insérée en 1,4-*trans,*
C : unité butadiène ou isoprène insérée en 1,4-*cis,*
L : unité butadiène insérée en 1,4-*cis* ou *trans*,
V : unité butadiène insérée en 1,2 (vinyle),
E : unité éthylène,
B : unité butadiène (sans distinction de microstructure),
Cy-1,2-T: motif 1,2-*trans*-cyclohexane,
Cy-1,2-C: motif 1,2-*cis*-cyclohexane,
Cy-1,4 : motif 1,4-cyclohexane.

En ce qui concerne l'attribution des signaux découlant des unités butadiène 1,2 (V) et 1,4-trans (T) et des unités 1,2-*trans*-cyclohexane (Cy-1,2-T), il faudra se reporter à l'article « Investigation of EthyleneButadiene Copolymers Microstructure by 1 H and 13 C NMR » : M.F. Llauro, C. Monnet, F. Barbotin, V. Monteil, R. Spitz, C. Boisson, Macromolecules 2001, 34, 6304*.*

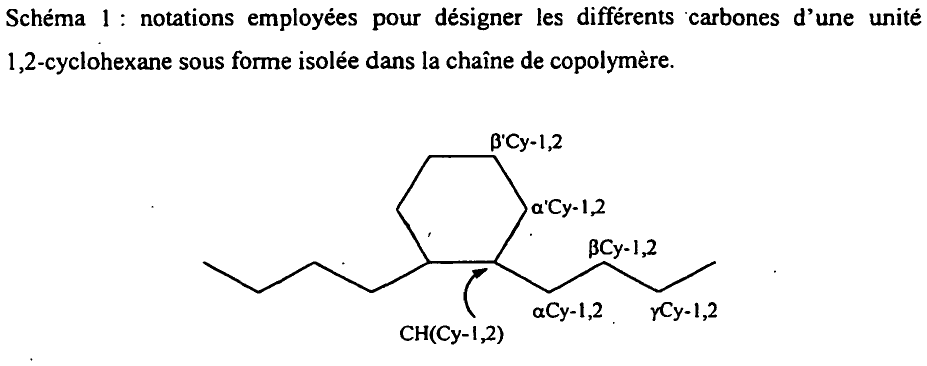

**Tableau 1 : déplacements chimiques des carbones relatifs aux motifs 1,2-trans-cyclohexane**

| **Type de carbone** | **δ (ppm)** |
|---|---|
| αCy-1,2-T | 33,96 |
| βCy-1,2-T | 27,00 |
| yCy-1,2-T | 30,59 |
| a'Cy-1,2-T | 32,26 |
| β'Cy-1,2-T | 26,66 |
| (CH)Cy-1,2-T | 42,01 |

**Tableau 2 : déplacements chimiques des carbones relatifs aux motifs 1,2-cis-cyctohexané**

| **Type de carbone** | **δ (ppm)** |
|---|---|
| αCy-1,2-C | 28,14 |
| βCy-1,2-C | 29,25 |
| γCy-1,2-C | |
| α'Cy-1,2-C | 30,50 |
| β'Cy-1,2-C | 24,22 |
| (CH)Cy-1,2-C | 39,67 |

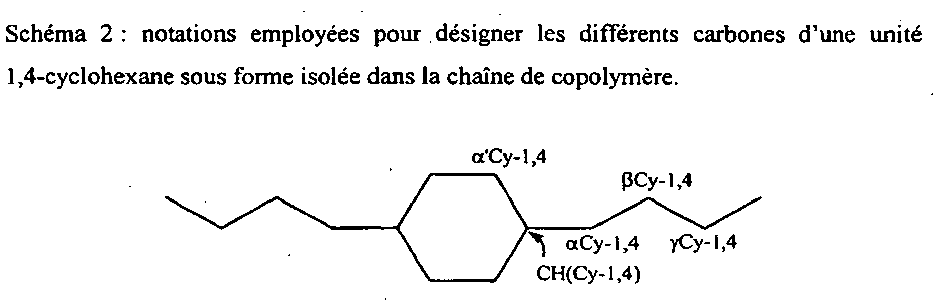

**Tableau 3 : déplacements chimiques des carbones relatifs aux motifs 1,4-cyclohexane**

| **Type de carbone** | **δ (ppm)** |
|---|---|
| aCy-1,4 | 37,90 |
| βCy-1,4 | 27,30 |
| γCy-1,4 | 30.40 |
| α'Cy-1,4 | 33,90 |
| (CH)Cy-1,4 | 38,40 |

### Données cristallographiques du complexe 3

| | |
|---|---|
| Formule moléculaire | C₅₆H₈₆B₂LiNdO₃Si |
| Masse moléculaire | 1008,18 g/mol |
| Faciès cristallin | Bloc jaune |
| Dimensions des cristaux (mm) | 0.20x0.18x0.15 |
| Système cristallin | Triclinique |
| Groupe spatial | P-1 |
| a(Å) | 16.5340(10) |
| b(Å) | 18.0490(10) |
| c(Å) | 21.2150(10) |
| α(°) | 75.0600(10) |
| β(°) | 71.0500(10) |
| γ(°) | 71.2000(10) |
| V(Å³) | 5584.9(5) |
| Z | 4 |
| d(g-cm⁻³) | 1.189 |
| F(000) | 2100 |
| µ(cm⁻¹) | 0.990 |
| Corrections d'absorption | Multi-balayage ; 0.8267 min, 0.8658 max |
| Diffractomètre utilisé | KappaCCD |
| Source de rayons X | MoKa |
| λ(Å) | 0.71069 |
| Monochromateur | Graphite |
| T (K) | 150.0(1) |
| Mode de balayage | Balayages phi et oméga |
| θ Maximum | 27.48 |
| Plages "HKL" | -21 19 ; -23 22 ; -27 22 |
| Réflexions mesurées | 41244 |
| Données uniques | 21641 |
| "Rint" | 0.0174 |
| Réflexions utilisées | 14863 |
| Critère | I > 2σI) |
| Type d'affinage | Fsqd |
| Atomes d'hydrogène | Mélangés |
| Paramètres affinés | 1025 |
| Réflexions / paramètre | 14 |
| wR2 | 0.2107 |
| R1 | 0.0656 |
| Masses a, b | 0.0961 ; 36.570 |
| GoF | 1.024 |
| Pic de différence / trou (e Å⁻³) | 5.506(0.147) / -3.370(0.147) |

## Revendications

1. Complexe métallocène borohydrure d'un lanthanide, **caractérisé en ce qu'**il répond à la formule suivante B : 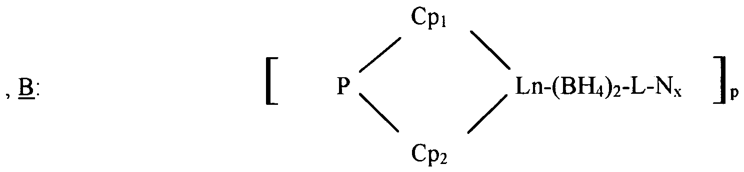
où Ln représente ledit lanthanide dont le numéro atomique est compris entre 57 et 71, inclusivement,
où est reliée au lanthanide Ln une molécule de ligand, constituée de deux groupes fluorényle Cp₁ et Cₚ₂ identiques ou différents qui sont substitués ou non et qui sont reliés entre eux par un pont P répondant à la formule MR₁R₂, où M est un élément de la colonne IVA de la classification de Mendeleev, et où R₁ et R₂, identiques ou différents, représentent un groupe alkyle comprenant de 1 à 20 atomes de carbone,
où L représente un métal alcalin choisi dans le groupe constitué par le lithium, le sodium et le potassium,
où N représente une molécule d'un solvant complexant, tel qu'un éther,
où x est un nombre entier ou non qui est supérieur à 0, et où
p est un nombre entier égal à 1 ou 2.

2. Complexe selon la revendication 1, **caractérisé en ce que** N représente le tétrahydrofuranne.

3. Complexe selon la revendication 1 ou 2, **caractérisé en ce que** x est égal à 1 et **en ce que** p est égal à 2, ledit complexe étant un dimère.

4. Complexe selon une des revendications précédentes, **caractérisé en ce que** Cp₁ et C_{P2} sont chacun constitués d'un même groupe fluorényle non substitué qui répond à la formule C₁₃H^{g},

5. Complexe selon une des revendications précédentes, **caractérisé en ce que** l'élément M compris dans ledit pont P de formule MP₁R₂ est le silicium.

6. Complexe selon la revendication 5, **caractérisé en ce qu'**il répond à la formule : 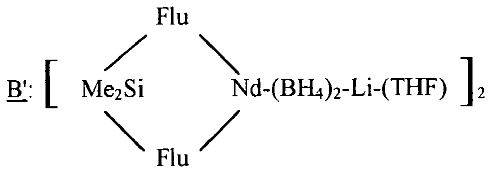
où Flu représente un groupe fluorényle non substitué de formule C₁₃H₈,
où Me représente un groupe méthyle,
où Si est le silicium, Nd est le néodyme , Li est le lithium et THF est le tétrahydrofuranne.

7. Complexe selon la revendication 5, **caractérisé en ce qu'**il répond à la formule : 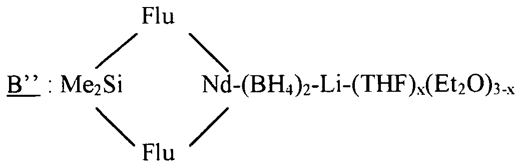
où Flu représente un groupe fluorényle non substitué de formule C₁₃Hg,
où Me représente un groupe méthyle,
où Si est le silicium, Nd est le néodyme, Li est le lithium et THF est le tétrahydrofuranne,
où x est un nombre entier allant de 0 à 3.

8. Complexe selon une des revendications 4 à 7, **caractérisés en ce qu'**il est à l'état de monocristaux.

9. Complexe selon la revendication 8, **caractérisé en ce que** lesdits monocristaux correspondent à un système de réseau monoclinique.

10. Complexe selon la revendication 8, **caractérisé en ce que** lesdits monocristaux correspondent à un système de réseau triclinique.

11. Procédé de préparation d'un complexe selon une des revendications 1 à 10, **caractérisé en ce qu'**il comprend la réaction d'un sel de ligand de formule P-Cp₁Cp₂-L₂ et d'une solution de tris(borohydrure) de lanthanide Ln dissous dans ledit solvant complexant et de formule Ln(BH₄)₃N₃.

12. Procédé de préparation d'un complexe selon la revendication 11, **caractérisé en ce que** ledit sel de ligand répond à la formule Me₂SiFlu₂-Li₂ et **en ce que** ledit tris(borohydrure) de lanthanide répond à la formule Nd(BH₄)₃(THF)₃, où THF est le tétrahydrofuranne.

13. Procédé de préparation d'un complexe selon la revendication 11 ou 12, **caractérisé en ce qu'**il comprend le coulage à température ambiante dudit sel de ligand dissous dans un autre solvant, tel que l'éther diéthylique, sur ladite solution de tris(borohydrure) de lanthanide à l'état dissous dans cet autre solvant.

14. Système catalytique utilisable pour la copolymérisation d'au moins une oléfine et d'au moins un diène conjugué, comprenant, d'une part, un complexe métallocène d'un lanthanide et, d'autre part, un co-catalyseur choisi dans le groupe constitué par un alkyl magnésium, un alkyl lithium, un réactif de Grignard et un mélange d'un alkyl lithium et d'un alkyl aluminium, **caractérisé en ce que** ledit complexe est un complexe métallocène borohydrure d'un lanthanide tel que défini à l'une des revendications 1 à 10.

15. Système catalytique selon la revendication 14, **caractérisé en ce que** ledit co-catalyseur est le butyloctyl magnésium.

16. Procédé de copolymérisation d'oléfines mettant en jeu un système catalytique **caractérisé en ce qu'**il comprend la copolymérisation de l'éthylène et du butadiène à l'aide d'un système catalytique selon la revendication 15, pour l'obtention d'un copolymère dans lequel les unités issues du butadiène comprennent des enchaînements sous forme de 1,2-cyclohexane.

17. Procédé de copolymérisation selon la revendication 16, **caractérisé en ce que** le taux molaire d'unités issues du butadiène dans ledit copolymère est supérieur à 10 %.

18. Procédé de copolymérisation selon une des revendications 16 ou 17, **caractérisé en ce que** le taux molaire des enchaînements 1,2-cyclohexane dans les unités dudit copolymère qui sont issues du butadiène est égal ou supérieur à 20 %.

19. Procédé de copolymérisation d'oléfines, **caractérisé en ce qu'**il comprend la copolymérisation de l'éthylène et du butadiène à l'aide du système catalytique selon la revendication 15, pour l'obtention d'un copolymère dans lequel les unités issues du butadiène comprennent des enchaînements sous forme de 1,4-cyclohexane.

20. Procédé de copolymérisation d'oléfines, **caractérisé en ce qu'**il comprend la copolymérisation de l'éthylène et du butadiène à l'aide du système catalytique selon la revendication 15, pour l'obtention d'un copolymère dans lequel les unités issues du butadiène comprennent des enchaînements sous forme d'enchaînements 1,2-cyclohexane et 1,4-cyclohexane.

21. Procédé de copolymérisation selon une des revendications 16 à 20, **caractérisé en ce que** le rapport molaire (co-catalyseur / complexe) est choisi inférieur ou égal à 10.

22. Procédé de copolymérisation selon la revendication 21, **caractérisé en ce que** le rapport molaire (co-catalyseur / complexe) est choisi inférieur ou égal à 2 et **en ce que** la polymérisation est réalisée sous une pression égale ou supérieure à 8 bars, pour l'obtention d'une masse moléculaire moyenne en nombre Mn dudit copolymère qui est égale ou supérieure à 200 000 g/mol.

23. Procédé de copolymérisation selon une des revendications 16 à 22, **caractérisé en ce qu'**il comprend :
(i) la préparation préalable dudit système catalytique en faisant réagir ledit complexe avec ledit co-catalyseur, puis
(ii) une réaction en suspension ou en solution, dans un solvant hydrocarboné, tel que le toluène, et à une température comprise entre -20° C et 120° C, dudit système catalytique obtenu en (i) en présence desdits monomères à polymériser.

## Claims

1. Borohydride metallocene complex of a lanthanide, **characterized in that** it corresponds to the following formula B: 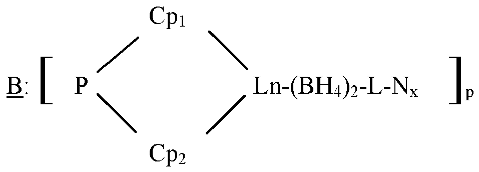
where Ln represents the said lanthanide having an atomic number of between 57 and 71 inclusive,
where, in the formula B, a ligand molecule composed of two identical or different fluorenyl groups Cp₁ and Cp₂ which are substituted or unsubstituted and which are connected to one another via a bridge P corresponding to the formula MR₁R₂, where M is an element from Group IVa of the Periodic Table of the Elements and where R₁ and R₂, which are identical or different, represent an alkyl group comprising from 1 to 20 carbon atoms, is connected to the lanthanide Ln,
where L represents an alkali metal chosen from the group consisting of lithium, sodium and potassium,
where N represents a molecule of a complexing solvent, such as an ether,
where x is an integral or non-integral number which is greater than 0, and
where p is an integer equal to 1 or 2.

2. Complex according to Claim 1, **characterized in that** N represents tetrahydrofuran.

3. Complex according to claim 1 or 2, **characterized in that** x is equal to 1 and **in that** p is equal to 2, the said complex being a dimer.

4. Complex according to one of the preceding claims, **characterized in that** Cp₁ and Cp₂ are each composed of the same unsubstituted fluorenyl group which corresponds to the formula C₁₃H₈.

5. Complex according to one of the preceding claims, **characterized in that** the element M included in the said bridge P of formula MR₁R₂ is silicon.

6. Complex according to Claim 5, **characterized in that** it corresponds to the formula: 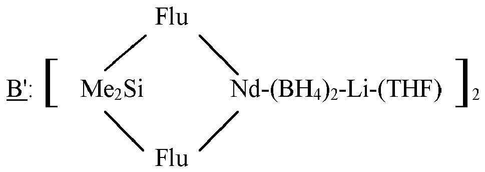
where Flu represents an unsubstituted fluorenyl group of formula C₁₃H₈,
where Me represents a methyl group,
where Si is silicon, Nd is neodymium, Li is lithium and THF is tetrahydrofuran.

7. Complex according to Claim 5, **characterized in that** it corresponds to the formula: 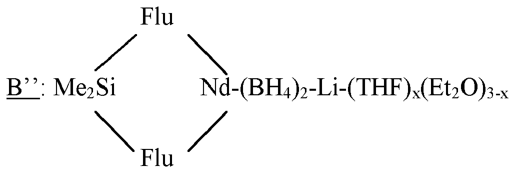
where Flu represents an unsubstituted fluorenyl group of formula C₁₃H₈,
where Me represents a methyl group,
where Si is silicon, Nd is neodymium, Li is lithium and THF is tetrahydrofuran,
where x is an integer ranging from 0 to 3.

8. Complex according to one of Claims 4 to 7, **characterized in that** it is in the form of single crystals.

9. Complex according to Claim 8, **characterized in that** the said single crystals correspond to a monoclinic lattice system.

10. Complex according to Claim 8, **characterized in that** the said single crystals correspond to a triclinic lattice system.

11. Process for the preparation of a complex according to one of Claims 1 to 10, **characterized in that** it comprises the reaction of a ligand salt of formula P-Cp₁Cp₂-L₂ and of a solution of lanthanide Ln tris(borohydride) dissolved in the said complexing solvent and of formula Ln(BH₄)₃N₃.

12. Process for the preparation of a complex according to Claim 11, **characterized in that** the said ligand salt corresponds to the formula Me₂SiFlu₂-Li₂ and **in that** the said lanthanide tris(borohydride) corresponds to the formula Nd(BH₄)₃(THF)₃ where THF is tetrahydrofuran.

13. Process for the preparation of a complex according to Claim 11 or 12, **characterized in that** it comprises running, at ambient temperature, the said ligand salt, dissolved in another solvent, such as diethyl ether, onto the said solution of lanthanide tris(borohydride) in the form dissolved in this other solvent.

14. Catalytic system which can be used for the copolymerization of at least one olefin and of at least one conjugated diene, comprising, on the one hand, a metallocene complex of a lanthanide and, on the other hand, a cocatalyst chosen from the group consisting of an alkylmagnesium, an alkyllithium, a Grignard reagent and a mixture of an alkyllithium and of an alkylaluminium, **characterized in that** the said complex is a borohydride metallocene complex of a lanthanide as defined in one of claims 1 to 10.

15. Catalytic system according to Claim 14, **characterized in that** the said cocatalyst is butyloctylmagnesium.

16. Process for the copolymerization of olefins employing a catalytic system, **characterized in that** it comprises the copolymerization of ethylene and butadiene using a catalytic system according to Claim 15 in order to obtain a copolymer in which the units resulting from butadiene comprise links in the form of 1,2-cyclohexane.

17. Copolymerization process according to Claim 16, **characterized in that** the molar level of units resulting from butadiene in the said copolymer is greater than 10%.

18. Copolymerization process according to either of Claims 16 and 17, **characterized in that** the molar level of the 1,2-cyclohexane links in the units of the said copolymer which results from butadiene is equal to or greater than 20%.

19. Process for the copolymerization of olefins, **characterized in that** it comprises the copolymerization of ethylene and butadiene using the catalytic system according to Claim 15 in order to obtain a copolymer in which the units resulting from butadiene comprise links in the form of 1,4-cyclohexane.

20. Process for the copolymerization of olefins, **characterized in that** it comprises the copolymerization of ethylene and butadiene using the catalytic system according to Claim 15 in order to obtain a copolymer in which the units resulting from butadiene comprise links in the form of 1,2-cyclohexane and 1,4-cyclohexane links.

21. Copolymerization process according to one of Claims 16 to 20, **characterized in that** the cocatalyst/complex molar ratio is chosen to be less than or equal to 10.

22. Copolymerization process according to Claim 21 **characterized in that** the cocatalyst/complex molar ratio is chosen to be less than or equal to 2 and **in that** the polymerization is carried out under a pressure equal to or greater than 8 bar in order to obtain a number-average molecular weight Mn of the said copolymer which is equal to or greater than 200 000 g/mol.

23. Copolymerization process according to one of Claims 16 to 22, **characterized in that** it comprises:
(i) the preliminary preparation of the said catalytic system by reacting the said complex with the said cocatalyst, then
(ii) a reaction in suspension or in solution in a hydrocarbon solvent, such as toluene, and at a temperature of between -20°C and 120°C of the said catalytic system obtained in (i) in the presence of the said monomers to be polymerized.

## Patentansprüche

1. Borhydrid-Metallocen-Komplex eines Lanthanids, **dadurch gekennzeichnet, dass** er der folgenden Formel B entspricht: 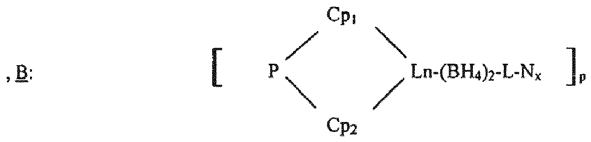
wobei Ln für das Lanthanid steht, dessen Ordnungszahl zwischen 57 und 71 inklusive liegt,
wobei an das Lanthanid Ln ein Ligandenmolekül gebunden ist, das aus zwei gleichen oder verschiedenen Fluorenylgruppen Cp₁ und Cp₂ besteht, die gegebenenfalls substituiert sind und über eine Brücke P der Formel MR₁R₂, wobei M für ein Element der Spalte IVA des Periodensystems von Mendelejew steht und R₁ und R₂ gleich oder verschieden sind und für eine Alkylgruppe mit 1 bis 20 Kohlenstoffatomen stehen, miteinander verbunden sind,
wobei L für ein Alkalimetall aus der Gruppe bestehend aus Lithium, Natrium und Kalium steht,
wobei N für ein Molekül eines komplexierendes Lösungsmittels wie eines Ethers steht,
wobei x für eine ganze oder gebrochene Zahl größer O steht und wobei
p für eine ganze Zahl mit einem Wert von 1 oder 2 steht.

2. Komplex nach Anspruch 1, **dadurch gekennzeichnet, dass** N für Tetrahydrofuran steht.

3. Komplex nach Anspruch 1 oder 2, **dadurch gekennzeichnet, dass** x gleich 1 ist und p gleich 2 ist, wobei der Komplex ein Dimer ist.

4. Komplex nach einem der vorhergehenden Ansprüche, **dadurch gekennzeichnet, dass** Cp₁ und Cp₂ jeweils aus der gleichen unsubtituierten Fluorenylgruppe, die der Formel C₁₃H₈ entspricht, bestehen.

5. Komplex nach einem der vorhergehenden Ansprüche, **dadurch gekennzeichnet, dass** es sich bei dem Element M in der Brücke P der Formel MR₁R₂ um Silicium handelt.

6. Komplex nach Anspruch 5, **dadurch gekennzeichnet, dass** er der Formel: 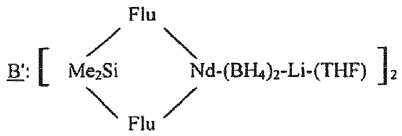 entspricht,
wobei Flu für eine unsubstituierte Fluorenylgruppe der Formel C₁₃H₈ steht,
wobei Me für eine Methylgruppe steht,
wobei Si für Silicium steht, Nd für Neodym steht, Li für Lithium steht und THF für Tetrahydrofuran steht.

7. Komplex nach Anspruch 5, **dadurch gekennzeichnet, dass** er der Formel: 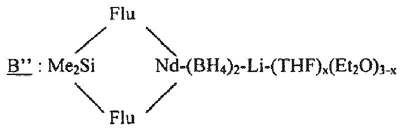 entspricht,
wobei Flu für eine unsubstituierte Fluorenylgruppe der Formel C₁₃H₈ steht,
wobei Me für eine Methylgruppe steht,
wobei Si für Silicium steht, Nd für Neodym steht, Li für Lithium steht und THF für Tetrahydrofuran steht, wobei x für eine ganze Zahl von 0 bis 3 steht.

8. Komplex nach einem der Ansprüche 4 bis 7, **dadurch gekennzeichnet, dass** er in Form von Einkristallen vorliegt.

9. Komplex nach Anspruch 8, **dadurch gekennzeichnet, dass** die Einkristalle einem monoklinen Gittersystem entsprechen.

10. Komplex nach Anspruch 8, **dadurch gekennzeichnet, dass** die Einkristalle einem triklinen Gittersystem entsprechen.

11. Verfahren zur Herstellung eines Komplexes nach einem der Ansprüche 1 bis 10, **dadurch gekennzeichnet, dass** man ein Ligandensalz der Formel P-Cp₁-Cp₂-L₂ und eine Lösung von Lanthanidtris(borhydrid) in dem komplexierenden Lösungsmittel und mit der Formel Ln (BH₄) ₃N₃ zur Reaktion bringt.

12. Verfahren zur Herstellung eines Komplexes nach Anspruch 11, **dadurch gekennzeichnet, dass** das Ligandensalz der Formel Me₂SiFlu₂-Li₂ entspricht und das Lanthanidtris (borhydrid) der Formel Nd(BH₄)₃(THF)₃ entspricht, wobei THF für Tetrahydrofuran steht.

13. Verfahren zur Herstellung eines Komplexes nach Anspruch 11 oder 12, **dadurch gekennzeichnet, dass** man das in einem anderen Lösungsmittel, wie Diethylether, gelöste Ligandensalz bei Umgebungstemperatur zu der Lösung von Lanthanidtris(borhydrid) in der in diesem anderen Lösungsmittel gelösten Form gießt.

14. Katalytisches System, das zur Copolymerisation von mindestens einem Olefin und mindestens einem konjugierten Dien verwendet werden kann und einerseits einen Metallocenkomplex eines Lanthanids und andererseits einen Cokatalysator, der aus der Gruppe bestehend aus einem Alkylmagnesium, einem Alkyllithium, einem Grignard-Reagens und einer Mischung eines Alkyllithiums und eines Alkylaluminiums ausgewählt ist, umfasst, **dadurch gekennzeichnet, dass** es sich bei dem Komplex um einen Borhydrid-Metallocen-Komplex eines Lanthanids gemäß einem der Ansprüche 1 bis 10 handelt.

15. Katalytisches System nach Anspruch 14, **dadurch gekennzeichnet, dass** es sich bei dem Cokatalysator um Butyloctylmagnesium handelt.

16. Verfahren zur Copolymerisation von Olefinen unter Verwendung eines katalytischen Systems, **dadurch gekennzeichnet, dass** man Ethylen und Butadien mit Hilfe eines katalytischen Systems nach Anspruch 15 zu einem Copolymer, in dem die sich aus Butadien ergebenden Einheiten Verknüpfungen in Form von 1,2-Cyclohexan umfassen, copolymerisiert.

17. Copolymerisationsverfahren nach Anspruch 16, **dadurch gekennzeichnet, dass** der molare Gehalt an sich aus Butadien ergebenden Einheiten in dem Copolymer über 10% liegt.

18. Copolymerisationsverfahren nach einem der Ansprüche 16 oder 17, **dadurch gekennzeichnet, dass** der molare Gehalt an 1,2-Cyclohexan-Verknüpfungen in den sich aus Butadien ergebenden Einheiten des Coppolymers größer gleich 20% ist.

19. Verfahren zur Copolymerisation von Olefinen, **dadurch gekennzeichnet, dass** man Ethylen und Butadien mit Hilfe eines katalytischen Systems nach Anspruch 15 zu einem Copolymer, in dem die sich aus Butadien ergebenden Einheiten Verknüpfungen in Form von 1,4-Cyclohexan umfassen, copolymerisiert.

20. Verfahren zur Copolymerisation von Olefinen, **dadurch gekennzeichnet, dass** man Ethylen und Butadien mit Hilfe eines katalytischen Systems nach Anspruch 15 zu einem Copolymer, in dem die sich aus Butadien ergebenden Einheiten Verknüpfungen in Form von 1,2-Cyclohexan- und 1,4-Cyclohexan-Verknüpfungen umfassen, copolymerisiert.

21. Copolymerisationsverfahren nach einem der Ansprüche 16 bis 20, **dadurch gekennzeichnet, dass** das Cokatalysator/Komplex-Molverhältnis kleiner gleich 10 ist.

22. Copolymerisationsverfahren nach Anspruch 21, **dadurch gekennzeichnet, dass** das Cokatalysator/Komplex-Molverhältnis kleiner gleich 2 ist und man die Polymerisation unter einem Druck größer gleich 8 bar durchführt, wobei man ein zahlenmittleres Molekulargewicht Mn des Copolymers größer gleich 200.000 g/mol erhält.

23. Copolymerisationsverfahren nach einem der Ansprüche 16 bis 22, **dadurch gekennzeichnet, dass** man:
(i) vorher das katalytische System herstellt, indem man den Komplex mit dem Cokatalysator umsetzt, und dann
(ii) das in (i) erhaltene katalytische System in Supsension oder in Lösung in einem KohlenwasserstoffLösungsmittel, wie Toluol, und bei einer Temperatur zwischen -20°C und 120°C in Gegenwart der zu polymerisierenden Monomere zur Reaktion bringt.
